# EUROPEAN PATENT APPLICATION

(11) **EP 4 414 901 A1**
(43) Date of publication of application: **14.08.2024**
(21) Application number: 22889035.6
(22) Date of filing: 29.09.2022
(51) Int. Cl.: G06N 20/00, G06N 3/08

(54) **MODEL WEIGHT ACQUISITION METHOD AND RELATED SYSTEM**

(30) Priority: 05.11.2021 CN 202111307019
(71) Applicant: Huawei Cloud Computing Technologies Co., Ltd., Guiyang, Guizhou 550025 (CN)
(72) Inventor: ZHOU, Weimin, Guiyang, Guizhou 550025 (CN); LIU, Yifeng, Guiyang, Guizhou 550025 (CN); LI, Yi, Guiyang, Guizhou 550025 (CN); DAI, Zonghong, Guiyang, Guizhou 550025 (CN)
(74) Representative: Maiwald GmbH
(86) International application number: PCT/CN2022/122500
(87) International publication number: WO 2023/078009

(57) **Abstract**

This application provides a model weight obtaining method, including: obtaining structure information of a first neural network model; searching, based on the structure information of the first neural network model, a weight library that stores a plurality of groups of historical weights to obtain a reference weight, where the reference weight is a weight of a second neural network model having a structure similar to that of the first neural network model in the plurality of groups of historical weights; and converting the reference weight to obtain a weight of the first neural network model. In the method, a weight of a neural network model having a structure similar to that of a to-be-trained neural network model is searched for in a weight library, and the weight is converted, to obtain a weight that can be used by the to-be-trained neural network model. Model training does not need to be performed from the beginning, improving model training efficiency.

## Description

This application claims priority to Chinese Patent Application No. 202111307019.7, filed with the China National Intellectual Property Administration on November 5, 2021 and entitled "MODEL WEIGHT OBTAINING METHOD AND RELATED SYSTEM", which is incorporated herein by reference in its entirety.

### TECHNICAL FIELD

This application relates to the field of artificial intelligence (artificial intelligence, AI) technologies, and in particular, to a model weight obtaining method and system, a computing device cluster, a computer-readable storage medium, and a computer program product.

### BACKGROUND

With emergence of neural networks (neural networks), artificial intelligence AI has made significant progress in many fields. For example, in the image processing field, an AI model (also referred to as a neural network model) constructed based on a neural network is widely applied to perform target detection on an image. For another example, in the natural language processing field, a neural network model is widely applied to understand semantics of a text, to implement intelligent question and answer.

To improve model training efficiency, a pre-training weight of a neural network model may be usually obtained by pre-training the neural network model based on a massive dataset. Then, when a neural network model having a same structure as the pre-trained neural network model needs to be trained for a specific task, the pre-training weight may be loaded to the to-be-trained neural network model, and fine-tuning (fine-tuning) is performed on a weight of the to-be-trained neural network model by using the pre-training weight as a start point and by using a dataset, to accelerate a training process. The fine-tuning means that during training of the neural network model, a weight of a model trained based on a similar dataset is reused for initialization, and then training is performed at a relatively low learning rate.

However, the foregoing method requires that the structure of the to-be-trained neural network model is consistent with the structure of the pre-trained neural network model. For example, a window size of a convolution kernel, a quantity of input/output channels of the convolution kernel, a quantity of convolutional layers, and the like need to be consistent. When the structure of the to-be-trained neural network model is inconsistent with the structure of the pre-trained neural network model that can be obtained, for example, when a scale of the to-be-trained neural network model is far greater than a scale of the pre-trained neural network model, it is difficult to directly load the pre-training weight for fine-tuning, or in an iterative training process, when a user changes the structure of the neural network model, it is difficult to continue training by using a historical weight, greatly affecting model training efficiency.

### SUMMARY

This application provides a model weight obtaining method. In the method, a weight of a neural network model having a structure similar to that of a to-be-trained neural network model is searched for in a weight library, and the weight is converted, to obtain a weight that can be used by the to-be-trained neural network model. Model training does not need to be performed from the beginning, improving model training efficiency. This application further provides a system corresponding to the foregoing method, a computing device cluster, a computer-readable storage medium, and a computer program product.

According to a first aspect, this application provides a model weight obtaining method. The method may be executed by a model weight obtaining system. In some embodiments, the model weight obtaining system may be a software system. A computing device or a computing device cluster executes the model weight obtaining method by running program code of the software system. In some other embodiments, the model weight obtaining system may alternatively be a hardware system configured to obtain a model weight.

Specifically, the weight library stores a plurality of groups of historical weights, and the plurality of groups of historical weights may be weights obtained by training neural network models of different structures in advance. The model weight obtaining system may obtain structure information of a first neural network model, search a weight library based on the structure information of the first neural network model, to obtain a weight of a second neural network model having a structure similar to that of the first neural network model, that is, a reference weight, and then convert the reference weight to obtain a weight of the first neural network model.

In this method, even if the structure of the first neural network model is inconsistent with that of a pre-trained neural network model, the weight of the second neural network model that is in the pre-trained neural network model and that has a structure similar to that of the first neural network model may be converted, so that the weight that can be used by the first neural network model is obtained, implementing reusing of the model weight. Model training does not need to be performed from the beginning, improving model training efficiency. This method can reuse a weight obtained by training in another training task to reduce a large quantity of repeated work and avoid resource waste.

In some possible implementations, the reference weight may be represented through a reference matrix corresponding to the structure of the second neural network model. The model weight obtaining system may convert the reference matrix, for example, convert through a rule-based conversion manner, or convert through a model-based conversion manner, to obtain the weight of the first neural network model.

The rule-based conversion manner is specifically: The model weight obtaining system crops, concatenates, and/or copies the reference matrix, to obtain a target matrix corresponding to the structure of the first neural network model, where the target matrix represents the weight of the first neural network model. The model-based conversion manner is specifically: The model weight obtaining system inputs the reference matrix into a weight conversion model for conversion, to obtain a target matrix.

The model weight obtaining system performs processing such cropping, concatenating, and/or copying on the reference matrix that represents the reference weight, or inputs the reference matrix into the weight conversion model, to obtain the weight that can be used by the first neural network model. Therefore, a weight of the pre-trained neural network model having a structure inconsistent with the first neural network model is reused, historical weight utilization is improved, resource waste caused by model training from the beginning is avoided, and a training time is shortened.

In some possible implementations, the second neural network model may include a convolutional layer, and the convolutional layer has a convolution kernel. Correspondingly, the reference matrix includes a matrix corresponding to the convolution kernel of the second neural network model. When a window size of a convolution kernel of the first neural network model is less than a window size of the convolution kernel of the second neural network model, or a quantity of input/output channels of a convolution kernel of the first neural network model is less than a quantity of input/output channels of the convolution kernel of the second neural network model, the model weight obtaining system may crop the reference matrix to obtain the target matrix. When a quantity of convolutional layers of the first neural network model is greater than a quantity of convolutional layers of the second neural network model, the model weight obtaining system may copy and/or concatenate the reference matrix to obtain the target matrix.

In the method, the matrix corresponding to the convolution kernel of the second neural network model is cropped, concatenated, and/or copied, to obtain the weight of the first neural network model. Model training is performed based on the weight, improving model training efficiency.

In some possible implementations, the model weight obtaining system may initialize the first neural network model based on the weight of the first neural network model, and then train an initialized first neural network model by using a dataset.

Because the model weight obtaining system uses a weight obtained through reference weight conversion, and specifically, a weight obtained through conversion in a weight of another training task, a model initialized by using the weight obtained through reference weight conversion usually has better effect than a model randomly initialized. Based on this, the model weight obtaining system may train the initialized model by using the weight obtained through reference weight conversion in a fine-tuning manner, to accelerate a training process and improve model training efficiency.

In some possible implementations, when training of the first neural network model is completed, the model weight obtaining system may further update a weight of a trained first neural network model to the weight library. In this way, diversity of data in the weight library can be enriched, providing help for training of another model.

In some possible implementations, the model weight obtaining system may determine, based on the structure information of the first neural network model and structure information of a neural network model corresponding to at least one group of the plurality of groups of historical weights in the weight library, a similarity between the structure of the first neural network model and a structure of the neural network model corresponding to the at least one group of historical weights, and then obtain the weight of the second neural network model as the reference weight based on the similarity between the structure of the first neural network model and the structure of the neural network model corresponding to the at least one group of historical weights.

A similarity between the structure of the first neural network model and the structure of the second neural network model meets a preset condition. That the similarity meets the preset condition may be that the similarity is greater than a preset threshold, or that the similarity is ranked top (for example, the similarity is ranked top n, where n is a positive integer).

In the method, the model weight obtaining system may determine the similarity between the structure of the neural network model corresponding to the at least one group of historical weights in the weight library and the structure of the first neural network model, determine, based on the similarity, the second neural network model having a structure similar to that of the first neural network model, and obtain the weight of the second neural network model as the reference weight. The weight that can be used by the first neural network model can be obtained by simply converting the reference weight, improving training efficiency of the first neural network model.

In some possible implementations, the model weight obtaining system may determine similarities between structures of different neural network models by using a graph neural network. Specifically, the model weight obtaining system may obtain the first graph structure based on the structure information of the first neural network model, and obtain the at least one second graph structure based on the structure information of the neural network model corresponding to the at least one group of historical weights. Then, the model weight obtaining system may determine, by using a graph neural network based on the first graph structure and the at least one second graph structure, the similarity between the structure of the first neural network model and the structure of the neural network model corresponding to the at least one group of historical weights.

Because the graph neural network naturally has a characteristic of aggregating encoded representations of neighboring nodes in a graph structure, encoding of different graph structures is separately performed based on the graph neural network. The encoded representations of the neighboring nodes may be aggregated based on a connection relationship between nodes in a graph structure, to obtain an updated encoded representation of each node. An encoded representation of the entire graph structure may be obtained based on the updated encoded representation of each node. Because features of a node and a neighboring node of the node are considered for updated encoded representations, a similarity between structures of models that is determined based on the foregoing encoded representations has relatively high accuracy. Based on this, the reference weight obtained by the model weight obtaining system based on the similarity has high reference value.

In some possible implementations, the weight library stores a label corresponding to each group of historical weights, and the label identifies a type of a neural network model corresponding to the historical weights and/or a type of a task to which the historical weights are applicable. When searching the weight library, the model weight obtaining system may determine a search set from the weight library based on the label corresponding to each group of historical weights, where the search set includes at least one group of historical weights whose label matches a type of the first neural network model and/or a type of a task to which the first neural network model is applicable. Then, the model weight obtaining system may determine the reference weight from the search set based on the structure information of the first neural network model.

In comparison with direct search for the weight library, in this method, the search set is first determined based on the label, and then the reference weight is determined from the search set. This effectively narrows a search range, improves search efficiency, and further improves efficiency of obtaining the weight of the first neural network model.

In some possible implementations, the model weight obtaining system may further improve search efficiency with reference to a historical search record. Specifically, the model weight obtaining system may query the historical search record of the weight library based on the structure information of the first neural network model, where the historical search record includes structure information of a historically searched neural network model and a found historical weight. When the structure information of the first neural network model is hit in the historical search record, the model weight obtaining system may obtain the found historical weight as the reference weight.

An operation of searching the reference weight from the weight library does not need to be performed again, greatly improving search efficiency. The method reduces occupation of computing resources and improves utilization of the computing resources.

According to a second aspect, this application provides a model weight obtaining system. The system includes:
an interaction module, configured to obtain structure information of a first neural network model;
a searching module, configured to search a weight library based on the structure information of the first neural network model, to obtain a reference weight, where the weight library stores a plurality of groups of historical weights, and the reference weight is a weight of a second neural network model having a structure similar to that of the first neural network model in the plurality of groups of historical weights; and
a conversion module, configured to convert the reference weight to obtain a weight of the first neural network model.

In some possible implementations, the reference weight is represented through a reference matrix corresponding to the structure of the second neural network model, and the conversion module is specifically configured to:
crop, concatenate, and/or copy the reference matrix, to obtain a target matrix corresponding to the structure of the first neural network model, where the target matrix represents the weight of the first neural network model; or
input the reference matrix into a weight conversion model for conversion, to obtain a target matrix.

In some possible implementations, the reference matrix includes a matrix corresponding to a convolution kernel of the second neural network model, and the conversion module is specifically configured to:
when a window size of a convolution kernel of the first neural network model is less than a window size of the convolution kernel of the second neural network model, or a quantity of input/output channels of a convolution kernel of the first neural network model is less than a quantity of input/output channels of the convolution kernel of the second neural network model, crop the reference matrix to obtain the target matrix; or
when a quantity of convolutional layers of the first neural network model is greater than a quantity of convolutional layers of the second neural network model, copy and/or concatenate the reference matrix to obtain the target matrix.

In some possible implementations, the system further includes:
a training module, configured to: initialize the first neural network model based on the weight of the first neural network model, and train an initialized first neural network model by using a dataset.

In some possible implementations, the system further includes:
an updating module, configured to: when training of the first neural network model is completed, update a weight of a trained first neural network model to the weight library.

In some possible implementations, the searching module is specifically configured to:
determine, based on the structure information of the first neural network model and structure information of a neural network model corresponding to at least one of the plurality of groups of historical weights in the weight library, a similarity between the structure of the first neural network model and a structure of the neural network model corresponding to the at least one group of historical weights; and
obtain the weight of the second neural network model as the reference weight based on the similarity between the structure of the first neural network model and the structure of the neural network model corresponding to the at least one group of historical weights, where a similarity between the structure of the first neural network model and the structure of the second neural network model meets a preset condition.

In some possible implementations, the searching module is specifically configured to:
obtain a first graph structure based on the structure information of the first neural network model, and obtain at least one second graph structure based on the structure information of the neural network model corresponding to the at least one group of historical weights; and
determine, by using a graph neural network based on the first graph structure and the at least one second graph structure, the similarity between the structure of the first neural network model and the structure of the neural network model corresponding to the at least one group of historical weights.

In some possible implementations, the weight library stores a label corresponding to each group of historical weights, the label identifies a type of a neural network model corresponding to the historical weights and/or a type of a task to which the historical weights are applicable, and the searching module is specifically configured to:
determine a search set from the weight library based on the label corresponding to each group of historical weights, where the search set includes at least one group of historical weights whose label matches a type of the first neural network model and/or a type of a task to which the first neural network model is applicable; and
determine the reference weight from the search set based on the structure information of the first neural network model.

In some possible implementations, the searching module is specifically configured to:
query a historical search record of the weight library based on the structure information of the first neural network model, where the historical search record includes structure information of a historically searched neural network model and a found historical weight; and
when the structure information of the first neural network model is hit in the historical search record, obtain the found historical weight as the reference weight.

According to a third aspect, this application provides a computing device cluster. The computing device cluster includes at least one computing device, and the at least one computing device includes at least one processor and at least one memory. The at least one processor and the at least one memory communicate with each other. The at least one memory stores computer-readable instructions, and the at least one processor is configured to execute the instructions stored in the at least one memory, the computing device cluster is enabled to perform the model weight obtaining method according to any one of the first aspect or the implementations of the first aspect.

According to a fourth aspect, this application provides a computer-readable storage medium. The computer-readable storage medium stores computer-readable instructions, and when the computer-readable instructions are run on a computing device or a computing device cluster, the computing device or the computing device cluster is enabled to perform the model weight obtaining method according to any one of the first aspect or the implementations of the first aspect.

According to a fifth aspect, this application provides a computer program product that includes instructions. The computer program product includes computer-readable instructions, and when the computer-readable instructions are run on a computing device or a computing device cluster, the computing device or the computing device cluster is enabled to perform the model weight obtaining method according to any one of the first aspect or the implementations of the first aspect.

Based on the implementations provided in the foregoing aspects, this application may be further combined to provide more implementations.

### BRIEF DESCRIPTION OF DRAWINGS

To describe the technical methods in embodiments of this application more clearly, the following briefly describes the accompanying drawings that need to be used in embodiments.
FIG. 1 is a system diagram of an architecture of a model weight obtaining method according to an embodiment of this application;
FIG. 2 is a schematic diagram of a configuration interface according to an embodiment of this application;
FIG. 3 is a flowchart of a model weight obtaining method according to an embodiment of this application;
FIG. 4 is a schematic flowchart of identifying a model file to obtain structure information according to an embodiment of this application;
FIG. 5 is a schematic diagram of weight conversion according to an embodiment of this application;
FIG. 6 is a schematic diagram of another weight conversion according to an embodiment of this application;
FIG. 7 is a schematic flowchart of a model weight obtaining method according to an embodiment of this application;
FIG. 8 is a schematic flowchart of a model weight obtaining method according to an embodiment of this application; and
FIG. 9 is a schematic diagram of a structure of a computing device cluster according to an embodiment of this application.

### DESCRIPTION OF EMBODIMENTS

The terms "first" and "second" in embodiments of this application are merely intended for a purpose of description, and shall not be understood as an indication or implication of relative importance or implicit indication of a quantity of indicated technical features. Therefore, a feature defined with "first" or "second" may explicitly or implicitly include one or more features.

First, some technical terms in embodiments of this application are described.

A neural network is a mathematical model or computing model that mimics a structure and a function of a biological neural network (for example, a central nervous system of an animal, especially a brain). Therefore, the neural network is also referred to as a neural network model (in this application, for brevity, unless otherwise specified, the neural network model is sometimes referred to as a model for short), and the neural network model is usually calculated by a large quantity of neuron connections.

A neuron may also be referred to as a node (node), and is a basic unit of the neural network model. Nodes form the neural network model by connection (connection). The node generally represents a mathematical operation applied to data (such as an image or a text). The mathematical operation includes but is not limited to convolution (convolution), pooling (pooling), addition (add), activation (for example, sigmoid, tanh, or ReLU), or the like. After input data is input into the neural network model, the node performs the corresponding mathematical operation on the input data, and then transfers processed data to a next node connected to the node for processing. By analogy, a last node completes data processing, and may obtain output data.

A learnable parameter needs to be set for the mathematical operation applied to some nodes. For example, a parameter such as a convolution kernel needs to be set for an operation such as convolution. These learnable parameters are also referred to as weights. The weight such as the convolution kernel may be represented through a matrix (matrix). The matrix may be a multidimensional matrix, also referred to as a multidimensional array (array).

The convolution kernel is used as an example. When the input data includes a plurality of channels, a convolution kernel whose quantity of input channels is the same as a quantity of channels of the input data may be usually constructed, to implement performing a cross-correlation operation with the input data of a plurality of channels. It is assumed that the quantity of channels of the input data is *cᵢ*, and the quantity of input channels of the convolution kernel is also *cᵢ.* A window size of the convolution kernel may be set to *kₕ* × *k_{w}.* Each input channel is allocated with a core array of the size of *kₕ* × *k_{w}. cᵢ* core arrays are connected on an input channel dimension to obtain a convolution kernel of a shape of *cᵢ* × *kₕ* × *k_{w}.* Further, the output data may also include a plurality of channels. Therefore, a core array in a shape of *cᵢ* × *kₕ* × *k_{w}* may be created for each output channel. *cₒ* core arrays in the shape of *cᵢ* × *kₕ* × *k_{w}* are connected on an output channel dimension, to obtain a convolution kernel in a shape of *cₒ* × *cᵢ* × *kₕ* × *k_{w}.* Therefore, a weight of the neural network model corresponds to a structure of the neural network model. The structure of the neural network model is different. For example, the window size of the convolution kernel is different, and the matrix representing the weight of the neural network model is different.

The neural network model usually has a learning capability, and the weight of the neural network model may be obtained through learning. A process of learning the weight of the neural network model is also referred to as model training. To improve model training efficiency, a pre-training weight of a neural network model may be obtained by pre-training the neural network model based on a massive dataset. Then, when a neural network model having a same structure as a pre-trained neural network model needs to be trained for a specific task (for example, a target detection task and an image classification task), the pre-training weight may be loaded to the to-be-trained neural network model, and fine-tuning (fine-tuning) is performed on a weight of the to-be-trained neural network model by using the pre-training weight as a start point and by using a dataset, to accelerate a training process.

However, a related method requires that the structure of the to-be-trained neural network model is consistent with a structure of the pre-trained neural network model. When the structure of the to-be-trained neural network model is inconsistent with the structure of the pre-trained neural network model that can be obtained, for example, when a scale of the to-be-trained neural network model is far greater than a scale of the pre-trained neural network model, it is difficult to directly load the pre-training weight to the to-be-trained neural network model for fine-tuning, or in an iterative training process, when a user changes the structure of the neural network model, it is difficult to continue training by using a historical weight, greatly affecting model training efficiency.

In view of this, embodiments of this application provide a model weight obtaining method. The method may be executed by a model weight obtaining system. In some embodiments, the model weight obtaining system may be a software system. A computing device or a computing device cluster executes the model weight obtaining method by running program code of the software system. In some other embodiments, the model weight obtaining system may alternatively be a hardware system configured to obtain a model weight. In embodiments of this application, an example in which the model weight obtaining system is the software system is used for description.

Specifically, the weight library stores a plurality of groups of historical weights, and the plurality of groups of historical weights may be weights obtained by training neural network models of different structures in advance. The model weight obtaining system may obtain, by searching the weight library, a weight of the pre-trained neural network model having a structure similar to that of the to-be-trained neural network model, that is, a reference weight, and then convert the reference weight to obtain a weight that can be used by the to-be-trained neural network model.

For ease of description, in embodiments of this application, the foregoing to-be-trained neural network model may also be referred to as a first neural network model, and the neural network model having a structure similar to that of the to-be-trained neural network model is referred to as a second neural network model.

In this method, even if the structure of the to-be-trained neural network model (that is, the first neural network model) is inconsistent with that of the pre-trained neural network model, the weight of the second neural network model that is in the pre-trained neural network model and that has a structure similar to that of the first neural network model may be converted, so that the weight that can be used by the first neural network model is obtained, implementing reusing of the model weight. Model training does not need to be performed from the beginning, improving model training efficiency. In addition, this method can reuse a weight obtained by training in another training task to reduce a large quantity of repeated work and avoid resource waste (for example, a computing resource).

The model weight obtaining method in embodiments of this application may be applied to a plurality of model training scenarios. The following separately describes different model training scenarios.

For example, the model weight obtaining method may be used in a scenario in which model training is performed on an initial neural network model. Specifically, the first neural network model may be the initial neural network model. The initial neural network model may be a large model, for example, a large model with a weight quantity of ten billion. The model weight obtaining system may search a weight of a neural network model (also referred to as a similar neural network model) that has a structure similar to that of the initial neural network model in the weight library, to obtain at least one group of reference weights. Each group of reference weights may be represented through a reference matrix corresponding to a structure of a similar neural network model. In this embodiment, a weight quantity included in the reference matrix may be at a level of one billion. The model weight system may perform an operation such as copying or concatenating on the reference matrix, to obtain a weight that can be used by the initial neural network model. The weight that can be used by the initial neural network model may be represented by a target matrix obtained by copying or concatenating the reference matrix. The model weight obtaining system may further initialize the initial neural network model based on the weight obtained through conversion, and then train an initialized neural network model, to accelerate a training process.

For another example, the model weight obtaining method may be used in a scenario in which model training is performed on a neural network model whose structure changes in an iterative training process. A neural network model for a task usually requires continuous iterative training. In an iterative training process, the user may choose to inherit a weight of a previous iteration to accelerate training. When a structure of the neural network model changes due to dataset expansion or identification classification adjustment, that is, when the first neural network model is a neural network model whose structure changes in an iterative training process, the model weight obtaining system may search a reference weight in the weight library, and convert the reference weight, to obtain a weight that can be used by the first neural network model. In this way, a problem that the weight of the previous iteration cannot be inherited and the user needs to perform training from the beginning is avoided, and a degree of freedom of optimizing the neural network model is improved.

To make the technical solutions of this application clearer and easier to understand, the following first describes a system architecture of the model weight obtaining method in this application.

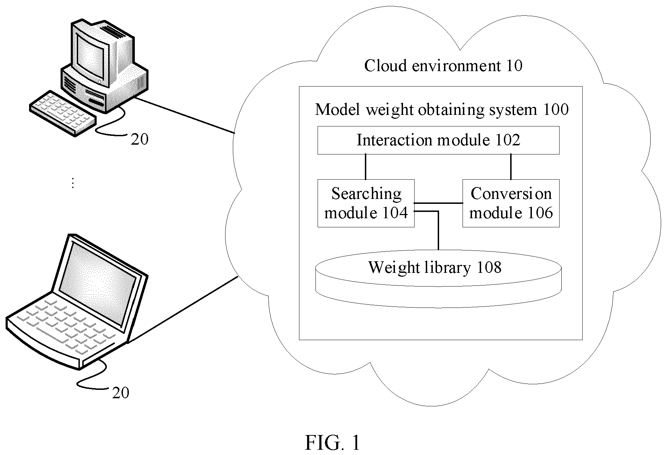

Refer to a schematic diagram of a system architecture of a model weight obtaining method shown in FIG. 1. As shown in FIG. 1, a model weight obtaining system 100 may be a software system, and the software system may be deployed in a cloud environment 10. The cloud environment indicates a central computing device cluster that is owned by a cloud service provider and that is used to provide computing, storage, and a communication resource. The central computing device cluster includes one or more central servers. The model weight obtaining system 100 provides a model weight obtaining service for a user in a form of a cloud service for the user to use.

Specifically, a terminal 20 may establish a connection to the cloud environment 10. A client (not shown in FIG. 1) is deployed on the terminal 20. The client may be a general-purpose client such as a browser, or a dedicated client dedicated to obtaining a model weight. The user may obtain the model weight through the cloud service provided by the model weight obtaining system 100 used by the client.

The model weight obtaining system 100 includes an interaction module 102, a searching module 104, a conversion module 106, and a weight library 108. The weight library 108 is a database used to store a weight, and the weight library 108 stores a plurality of groups of historical weights. The historical weights may be, for example, weights obtained by training neural network models of different structures in different tasks. The weight library 108 may be a database built by the cloud service provider itself. In some embodiments, the model weight obtaining system 100 may not include the foregoing self-built weight library 108. For example, the model weight obtaining system 100 may directly invoke a third-party database.

The following describes in detail functional modules of the model weight obtaining system 100.

The interaction module 102 is configured to obtain structure information of a first neural network model. The searching module 104 is configured to search the weight library 108 based on the structure information of the first neural network model, to obtain a reference weight. The reference weight is a weight of a second neural network model having a structure similar to that of the first neural network model in a plurality of groups of historical weights stored in the weight library 108. The conversion module 106 is configured to convert the reference weight to obtain a weight of the first neural network model.

The interaction module 102 provides interaction logic. When accessing the model weight obtaining system 100, the client may load the interaction logic provided by the interaction module 102, to provide an interaction interface for the user. The user interface may be a graphical user interface (graphical user interface, GUI) or a command user interface (command user interface, CUI). That the interaction interface is a GUI is used as an example. The interaction interface may provide a structure information obtaining control and a weight obtaining control. The user may directly input the structure information of the first neural network model by using the structure information obtaining control, and the model weight obtaining system 100 receives the structure information of the first neural network model that is input by the user. In some embodiments, the interaction interface may also provide a model file obtaining control. Alternatively, the user may input a model file of the first neural network model by using the model file obtaining control. The model file is specifically a file that stores information required for completing an inference process of the model. For example, the model file stores the structure information and the weight of the model. The model weight obtaining system 100 may obtain the structure information of the first neural network model by identifying the foregoing model file. When the weight obtaining control is triggered, the model weight obtaining system 100 may search the weight library 108 based on the structure information of the first neural network model to obtain a reference weight, and convert the reference weight to obtain the weight that can be used by the first neural network model.

It should be noted that the foregoing model weight obtaining service may be separately provided for the user, or may be provided for the user as a value-added service of a model training service. When the model weight obtaining service is provided for the user as the value-added service of the model training service, a function of the model weight obtaining system 100 may alternatively be implemented by a training platform. The training platform may be a cloud platform used for model training.

For example, the cloud service provider may provide the model training service for the user by providing the training platform. When the user purchases the value-added service, the use permission of the model weight obtaining service is delivered to the user. When training the neural network model on the foregoing training platform, the user may invoke the model weight obtaining service by using the training platform, to obtain the weight of the first neural network model. Further, the training platform initializes the first neural network model based on the weight (for example, the converted weight) of the first neural network model, and then trains an initialized first neural network model by using a dataset, to accelerate a training process.

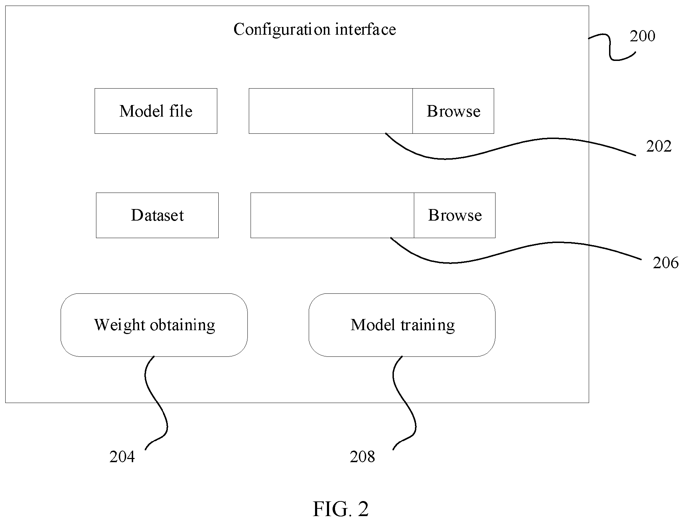

The following uses a scenario in which the training platform performs the model weight obtaining method as an example for description. Refer to a schematic diagram of a configuration interface shown in FIG. 2. A configuration interface 200 includes a model file obtaining control 202, a weight obtaining control 204, a dataset configuration control 206, and a training control 208.

The user may input the model file of the first neural network model by using the model file obtaining control 202. The training platform identifies the model file to obtain the structure information of the first neural network model. The user triggers the weight obtaining control 204. In response to an operation of the user, the training platform searches the weight library 108 to obtain the reference weight, and converts the reference weight to obtain the weight of the first neural network model. The user further configures, by using the dataset configuration control 206, a dataset used for training the first neural network model. For example, a dataset may be selected by browsing a directory, and then the user triggers the training control 208. In response to an operation of the user, the training platform initializes the first neural network model based on the obtained weight, and then trains the initialized first neural network model by using the configured dataset.

In some possible implementations, the model weight obtaining system 100 (or the training platform) may alternatively be deployed in an edge environment or a terminal. The edge environment indicates an edge computing device cluster whose geographical location is close to the terminal (in other words, an end-side device) and that is configured to provide computing, storage, and a communication resource. The edge computing device cluster includes one or more edge computing devices, and the edge computing device may be a server, a computing box, or the like. The terminal includes but is not limited to a desktop computer, a notebook computer, a smartphone, or the like. Specifically, a developer may package program code of the model weight obtaining system 100 into a software package, and then distribute the software package through a distribution system such as an application store for the user to use. For example, the user may install the software package on the terminal, and the terminal runs the software package, to perform the model weight obtaining method.

It should be noted that the foregoing embodiment is described by using an example in which the model weight obtaining system 100 is the software system. In some possible implementations, the model weight obtaining system 100 may be a hardware system, for example, may include one or more servers in the cloud environment 10.

The following describes in detail the model weight obtaining method provided in embodiments of this application from a perspective of the model weight obtaining system 100.

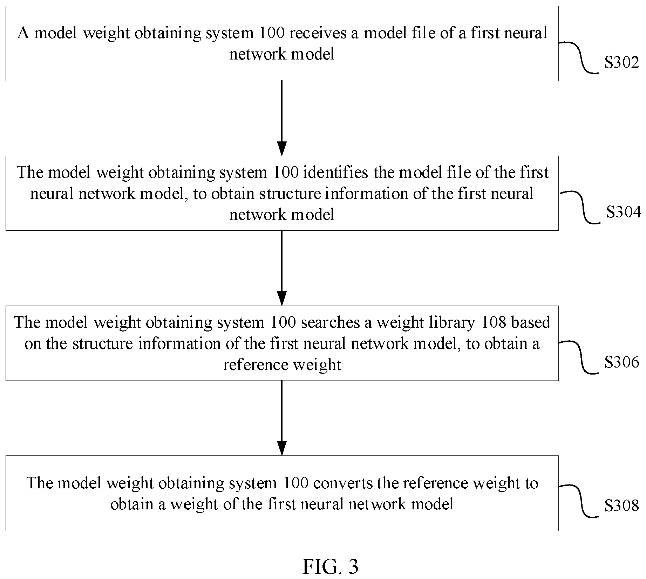

Refer to a flowchart of a model weight obtaining method shown in FIG. 3. The method includes the following steps.

S302: The model weight obtaining system 100 receives a model file of a first neural network model.

A model file is a file that stores structure information and a weight of a neural network model. The neural network model may be constructed based on a deep learning framework. The deep learning framework abstracts a calculation process of the neural network model into a data flow graph (data flow graph). The data flow graph may reflect the structure information of the neural network model. When the neural network model runs, an executor of the deep learning framework may sequentially execute data flow graphs according to a scheduling policy, to complete the calculation process.

When the neural network model uses different deep learning frameworks, the model file may use different formats. For example, when the neural network model uses a TensorFlow framework, the model file stores the data flow graph through Protobuf and stores the weight through SSTable. For another example, when the neural network model uses a Keras framework, the model file stores the data flow graph through a JavaScript object notation (JavaScript Object Notation, JSON), and stores the weight through h5py.

The first neural network model is a to-be-trained neural network model. In some embodiments, the to-be-trained neural network model may be an initial neural network model. In some other embodiments, the to-be-trained neural network model may be a neural network model whose structure changes in an iterative training process, for example, a neural network model whose structure changes due to dataset expansion, or a neural network model whose structure changes due to identification classification adjustment.

During specific implementation, the model weight obtaining system 100 may provide an interaction interface for the user, for example, an interaction interface of a GUI type or a CUI type, and then receive the model file of the first neural network model that is input by the user through the foregoing interaction interface. In some embodiments, the model weight obtaining system 100 may alternatively have model files of a plurality of neural network models built in, then determine, based on a selection operation of the user, a neural network model selected by the user as the first neural network model, and obtain the model file of the first neural network model.

S304: The model weight obtaining system 100 identifies the model file of the first neural network model, to obtain structure information of the first neural network model.

Specifically, the model file of the first neural network model includes the data flow graph, and the data flow graph can reflect the structure information of the first neural network. The model weight obtaining system 100 may identify the foregoing data flow graph to obtain the structure information of the first neural network model.

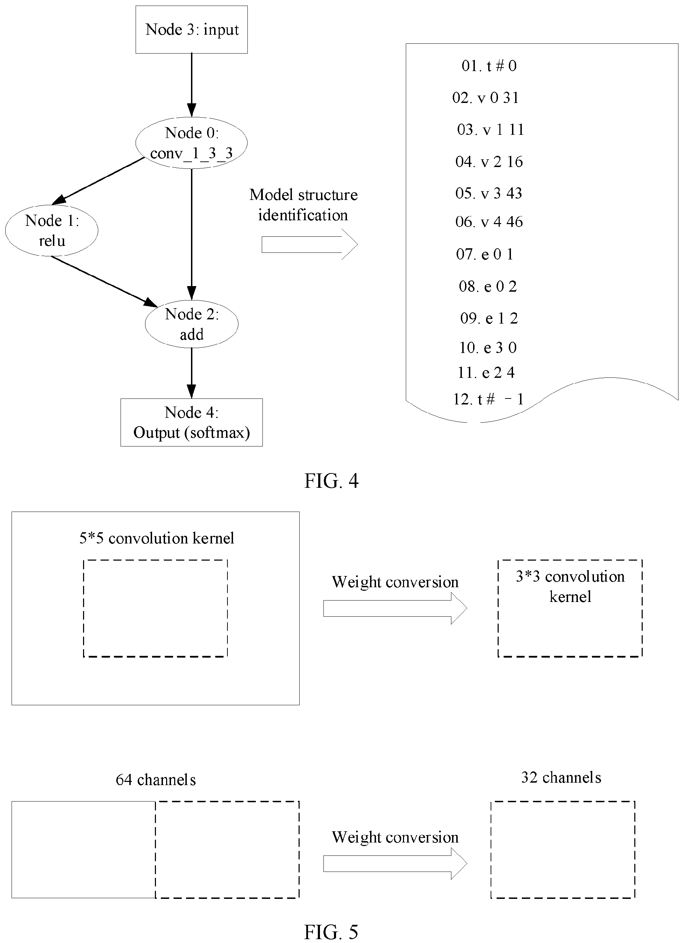

Refer to a schematic flowchart of identifying a model file to obtain structure information shown in FIG. 4. As shown in FIG. 4, the model file includes a data flow graph, and the data flow graph uses a directed graph including a "node" (node) and an "edge" (edge) to describe mathematical calculation. The "node" generally represents an applied mathematical operation. The node includes a node used to apply different mathematical operations such as convolution (conv for short), activation (for example, ReLU), and addition (add). The node may alternatively represent a start point of data input (feed in)/an end point of data output (push out), or an end point of reading/writing a persistent variable (persistent variable). The "edge" generally indicates an input/output relationship between "nodes". The model weight obtaining system 100 may identify the "node" and the "edge" in the foregoing data flow graph, to obtain the structure information represented in a data encoding form.

The structure information represented in the data encoding form may be stored in a data encoding file. As shown in FIG. 4, t # 0 is a flag of a first row of the data encoding file, t # -1 is a flag of a last row of the data encoding file, and each row in the middle of the data encoding file represents a node or an edge. "v" is a node flag, indicating that the row is used to describe a node, and "e" is an edge flag, indicating that the row is used to describe an edge. The row representing the node further includes a node identifier (identifier, ID) and a node type, and the row representing the edge further includes a node ID of a start node of the edge and a node ID of an end node of the edge.

In an example shown in FIG. 4, the second to sixth rows of the data encoding file represent five nodes with node identifiers 0, 1, 2, 3, and 4 respectively in the neural network model. A node type code of the node 0 is 31. It can be learned based on a correspondence between a node type and a node type code that the node 0 is a node used to apply the convolution operation, and a convolution kernel is a matrix of 1 × 3 × 3. In other words, the convolution kernel includes an input channel, and a window size of the convolution kernel is a convolution 3 × 3. A node type code of the node 1 is 11 and a node type code of the node 2 is 16. It can be learned based on the correspondence between the node type and the node type code that the node 1 is a node used to apply the ReLU operation, and the node 2 is a node used to apply the add operation. A node type code of the node 3 is 43 and a node type code of the node 4 is 46. It can be learned based on the correspondence between the node type and the node type code that the node 3 and the node 4 are a start point of data input and an end point of data output.

The seventh to eleventh rows of the data encoding file represent edges in the neural network model. For example, the seventh row represents an edge on which the node 0 points to the node 1, the eighth row represents an edge on which the node 0 points to the node 2, and the ninth row represents an edge on which the node 1 points to the node 2. The tenth row represents an edge on which the node 3 points to the node 0, and the eleventh row represents an edge on which the node 2 points to the node 4.

The foregoing S302 and S304 are an implementation of obtaining the structure information of the first neural network model by the model weight obtaining system 100 in this embodiment of this application. In another possible implementation of this embodiment of this application, the model weight obtaining system 100 may alternatively obtain the structure information of the first neural network model in another manner. For example, the model weight obtaining system 100 may directly receive the structure information of the first neural network model that is input by the user.

S306: The model weight obtaining system 100 searches the weight library 108 based on the structure information of the first neural network model, to obtain a reference weight.

The weight library 108 stores a plurality of groups of historical weights. Each group of historical weights may be represented through a matrix. The plurality of groups of historical weights may be weights obtained by training neural network models of different structures in advance. For example, the plurality of groups of historical weights may include weights that are trained in advance for a commonly used neural network model based on an open-source dataset, or weights that are obtained through training in a project development process. In this way, the weight library 108 can ensure diversity of network structures and diversity of training tasks, and can provide a proper weight for the user.

The weight library 108 usually uses a data object of a group (group) type to store the historical weight. A group can be compared to a dictionary, including a key (key) and a value (value). The key may usually be an identifier of a group member, and the value may usually be a group member, where the group member includes a matrix representing a historical weight. For example, if the pre-trained neural network model includes a node used to apply the convolution operation, the key may include an identifier of the node, and the value may be a matrix corresponding to a convolution kernel used by the foregoing node.

Specifically, the model weight obtaining system 100 may obtain structure information of a neural network model corresponding to a weight stored in the weight library 108, for example, obtain the structure information from a model file of the neural network model corresponding to the weight stored in the weight library 108, and then determine, based on the structure information of the first neural network model and the structure information of the neural network model corresponding to the historical weight stored in the weight library 108, a similarity between a structure of the first neural network model and a structure of a neural network model corresponding to at least one group of historical weights. When the similarity is greater than a preset threshold, it is determined that the structure of the first neural network model is similar to the structure of the neural network model corresponding to the weights. For ease of description, the neural network model having a structure similar to that of the first neural network model is referred to as a second neural network model. The model weight obtaining system 100 uses a weight of the second neural network model as the reference weight. The reference weight is the weight of the second neural network model having a structure similar to that of the first neural network model in the plurality of groups of historical weights.

In some possible implementations, the model weight obtaining system 100 may alternatively traverse the weight library 108 to obtain structure information of a neural network model corresponding to each group of weights stored in the weight library 108, then separately determine a similarity between a structure of the first neural network model and a structure of the neural network model corresponding to each group of historical weights in the weight library 108, and determine a neural network model having a highest similarity with the structure of the first neural network model or has a similarity ranked top (for example, top n, where n is a positive integer) as the second neural network model having a structure similar to that of the first neural network model. The model weight obtaining system 100 obtains the weight of the foregoing second neural network model, to obtain the reference weight.

Further, the model weight obtaining system 100 may alternatively obtain a weight of a neural network model with a highest similarity from a plurality of second neural network models whose similarities are greater than a preset threshold, to obtain the reference weight. The model weight obtaining system 100 may obtain, as the reference weight, a weight of a neural network model whose structure similarity to the first neural network model meets a preset condition. That the similarity is greater than the preset threshold and/or that the similarity is ranked top are/is some specific implementations that the similarity meets the preset condition. This is not limited in this embodiment of this application.

During specific implementation, the model weight obtaining system 100 may determine similarities between structures of different neural network models by using a graph neural network (graph neural network, GNN). Specifically, the model weight obtaining system 100 may obtain a corresponding graph structure based on structure information of a neural network model, and then encode the graph structure by using the graph neural network GNN, to obtain encoded representations of different graph structures. The encoded representations are usually vectors. The model weight obtaining system 100 may determine distances between different vectors, for example, a cosine distance or a Euclidean distance, to obtain the similarities between the structures of the different models.

Node types of nodes in the neural network model are usually limited. The model weight obtaining system 100 may encode nodes of different node types in advance, to obtain an encoded representation of a node of each node type. When encoding the graph structure corresponding to the neural network model, the model weight obtaining system 100 may obtain an encoded representation of each node in the neural network model. Encoded representations of neighboring nodes may be aggregated based on a connection relationship between the nodes in the graph structure, to obtain an updated encoded representation of each node. An encoded representation of the entire graph structure may be obtained based on the updated encoded representation of each node. For example, the model weight obtaining system 100 may concatenate updated encoded representations of nodes to obtain the encoded representation of the graph structure. Because features of a node and a neighboring node of the node are considered for updated encoded representations, a similarity between structures of models that is determined based on the foregoing encoded representations has relatively high accuracy.

The foregoing graph neural network used to determine similarities between the structures of the different neural network models may be obtained through training. Specifically, the model weight obtaining system 100 may collect different types of neural network models in advance, and add a type label to the collected neural network model. The type label identifies a type of the neural network model, for example, darknet, residual network (residual network, resnet), or retinanet. Then, sample data is generated based on a graph structure and the type label of the collected neural network model. The model weight obtaining system 100 may connect a to-be-trained graph neural network to a classifier, and then input the sample data into the to-be-trained graph neural network. The graph neural network may encode the graph structure in the sample data, and the classifier may perform classification based on an encoded representation of the graph structure. The model weight obtaining system 100 may determine a loss value based on a classification result and the type label in the sample data, and update a weight of the graph neural network based on the loss value, to train the graph neural network. When the loss value tends to converge or is less than a preset value, the model weight obtaining system 100 may stop training the graph neural network, and obtain a trained graph neural network, to encode the graph structure.

Further, to improve search efficiency, the weight library 108 may further store a label corresponding to each group of historical weights. The label identifies a type of a neural network model corresponding to the historical weights and/or a type of a task to which the historical weights are applicable. Correspondingly, the model weight obtaining system 100 may determine a search set from the weight library based on the label corresponding to each group of historical weights, where the search set includes at least one group of historical weights whose label matches a type of the first neural network model and/or a type of a task to which the first neural network model is applicable. Then, the model weight obtaining system 100 may determine the reference weight from the search set based on the structure information of the first neural network model. In this embodiment, the model weight obtaining system 100 may effectively narrow a search range based on the label of the historical weight, thereby improving search efficiency.

In some possible implementations, the model weight obtaining system 100 may store a historical search record. The historical search record includes structure information of a historically searched neural network model and a found historical weight. Based on this, the model weight obtaining system 100 may further query the historical search record based on the structure information of the first neural network model. When the structure information of the first neural network model is hit in the historical search record, a historical weight corresponding to the structure information in the historical search record may be obtained as the reference weight.

S308: The model weight obtaining system 100 converts the reference weight to obtain a weight of the first neural network model.

Structure information of a neural network model corresponding to the reference weight found by the model weight obtaining system 100 is inconsistent with the structure information of the first neural network model, and it is difficult for the first neural network model to directly load the reference weight. Therefore, the model weight obtaining system 100 may convert the reference weight to obtain the weight that can be directly loaded by the first neural network model.

The model weight obtaining system 100 converts the reference weight in a plurality of implementations. The following separately describes different implementations in detail.

A first implementation is rule-based weight conversion. Specifically, the reference weight is represented through a reference matrix corresponding to the structure of the second neural network model. The model weight obtaining system 100 may crop, concatenate, and/or copy the reference matrix, to obtain a target matrix corresponding to the structure of the first neural network model. The target matrix represents the weight of the first neural network model.

Cropping the reference matrix means extracting some elements in the reference matrix to form a new matrix. For example, several rows or several columns of the matrix may be extracted, or several columns (rows) in several rows (columns) of elements may be extracted. The model weight obtaining system 100 may extract several rows and/or several columns of the reference matrix based on a preset constraint condition, to implement cropping of the reference matrix. The constraint condition may be one or more of left alignment, right alignment, top alignment, bottom alignment, or center point alignment. Concatenating the reference matrix means concatenating elements in a plurality of reference matrices by row or column. For example, if a window size of a reference matrix 1 is 3 × 3, and a window size of a reference matrix 2 is 3 × 2, elements of the reference matrix 1 and the reference matrix 2 may be concatenated by row, to obtain a matrix whose window size is 3 × 5. Copying the reference matrix means extracting all elements in the reference matrix to obtain a copy of the reference matrix.

Refer to a schematic diagram of weight conversion shown in FIG. 5. The reference matrix includes a matrix corresponding to a convolution kernel of the second neural network model. When a window size of a convolution kernel of the first neural network model is less than a window size of the convolution kernel of the second neural network model, or a quantity of input/output channels of a convolution kernel of the first neural network model is less than a quantity of input/output channels of the convolution kernel of the second neural network model, the model weight obtaining system 100 may crop the reference matrix to obtain the target matrix. For example, if the window size of the convolution kernel of the second neural network model is 5*5, the model weight obtaining system 100 may crop the convolution kernel of the second neural network model, for example, extract elements in the second to fourth rows of the convolution kernel of the second neural network model, and extract elements in the second to fourth columns from the elements in the second to fourth rows, to obtain a convolution kernel whose window size is 3*3, so that the weight of the first neural network model is obtained.

When a quantity of convolutional layers of the first neural network model is greater than a quantity of convolutional layers of the second neural network model, the model weight obtaining system 100 copies and/or concatenates the reference matrix to obtain the target matrix, so that the weight of the first neural network model is obtained. For example, the model weight obtaining system 100 may copy reference matrices corresponding to convolution kernels of some convolutional layers in the second neural network model, to obtain a target matrix, and use the target matrix as a weight of a convolutional layer having a convolution kernel with a same window size in the first neural network model.

A second implementation is model-based weight conversion. Specifically, the model weight obtaining system 100 may input the reference weight into a weight conversion model for conversion, to obtain the weight of the first neural network model.

Specifically, in an image super-resolution field, a convolutional neural network model may convert a low-resolution image into a high-resolution image. For example, in a model of image super-resolution using deep convolutional neural networks (Image Super-Resolution Using Deep Convolutional Networks, SRCNNs) and a very deep super-resolution (very deep super-resolution, VDSR) model, a convolutional neural network is used to convert the low-resolution image into the high-resolution image. The model weight obtaining system 100 may design an appropriate convolutional neural network model by referring to an image super-resolution processing method, and learn a relationship between different convolution kernels, to obtain the weight conversion model.

Specifically, the model weight obtaining system 100 may train the convolutional neural network model in a supervised learning manner, to obtain the weight conversion model. Input of the convolutional neural network model may be a weight matrix, and output of the convolutional neural network model is another weight matrix. An example in which the weight matrix is a matrix corresponding to a convolution kernel is used for description. Input and output of the convolutional neural network model are convolution kernels, and the input and output convolution kernels may be matrices of different shapes. The matrices of different shapes include matrices of different window sizes.

The model weight obtaining system 100 may obtain a random initialization value of the convolution kernel, and then obtain an update value of the convolution kernel in an iteration process. It is assumed that the convolution kernel undergoes 10000-step iteration and has relatively good effect after 8000-step iteration, some elements are extracted from update values in the first 2000 steps to obtain 2000 first convolution kernels. Then, 2000 second convolution kernels are obtained based on update values after the 8000 steps. The second convolution kernels are used as labels of the first convolution kernels to form training samples. The model weight obtaining system 100 may input the foregoing training sample into the convolutional neural network model, calculate a loss value based on a convolution kernel output by the convolutional neural network model and the second convolution kernel, and update a parameter of the convolutional neural network model based on the loss value by using a back propagation algorithm, to implement training of the convolutional neural network model. When a training stop condition is met, for example, when the loss value tends to converge or is less than a preset value, training on the convolutional neural network model is stopped, and a trained convolutional neural network model is used as the weight conversion model.

It should be noted that the model weight obtaining system 100 may separately train the convolutional neural network model for convolution kernels of different window sizes. For example, the model weight obtaining system 100 may train one convolutional neural network model that converts a convolution kernel of 3 × 3 into a convolution kernel of 5 × 5, and train one convolutional neural network model that converts a convolution kernel of 3 × 3 into a convolution kernel of 7 × 7. In this way, different weight conversion requirements may be met.

In some possible implementations, the model weight obtaining system 100 may alternatively obtain random initialization values and update values of convolution kernels of different window sizes, and extract a convolution kernel pair in a same manner for convolution of each window size. The convolution kernel pair includes a first convolution kernel and a second convolution kernel. In this way, the model weight obtaining system 100 may obtain convolution kernel pairs of different window sizes, for example, a convolution kernel pair formed by a convolution kernel of 3 × 3 and a convolution kernel of 5 × 5, a convolution kernel pair formed by a convolution kernel of 5 × 5 and a convolution kernel of 7 × 7, and a convolution kernel pair formed by a convolution kernel of 3 × 3 and a convolution kernel of 7 × 7. The model weight obtaining system 100 may generate a training sample based on the foregoing convolution kernel pair and a size of a convolution kernel expected to be output. The model weight obtaining system 100 inputs the foregoing training sample into the convolutional neural network model, and the convolutional neural network model may generate a convolution kernel based on a size of the first convolution kernel in convolution kernel pair and the size of the convolution kernel expected to be output. The convolutional neural network model may determine a loss value based on the generated convolution kernel and the second convolution kernel used as a label, and update a parameter of the convolutional neural network model based on the loss value by using a back propagation algorithm, to implement training the convolutional neural network model. When a training stop condition is met, training may be stopped, and a trained convolutional neural network model is used as the weight conversion model.

The weight conversion model may output, based on a size of an input convolution kernel and the size of the convolution kernel expected to be output, a convolution kernel whose size is consistent with the size of the convolution kernel expected to be output, and has relatively good generalization performance.

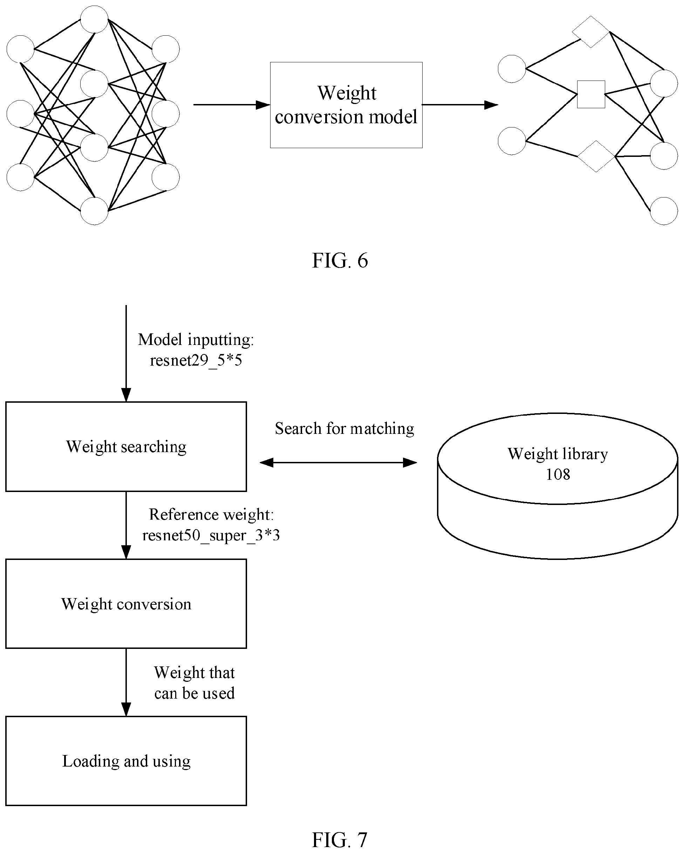

Refer to a schematic diagram of weight conversion shown in FIG. 6. The model weight obtaining system 100 may input the reference weight into the foregoing weight conversion model, and may process the reference weight based on a relationship between different weights learned by the weight conversion model, so that a processed weight meets a loading requirement of the first neural network model.

FIG. 5 and FIG. 6 are merely some examples of weight conversion. In another possible implementation of this embodiment of this application, the model weight obtaining system 100 may alternatively convert the reference weight by using another rule or another model.

Based on the foregoing content description, an embodiment of this application provides the model weight obtaining method. In the method, even if the structure of the to-be-trained first neural network model is inconsistent with that of an available neural network model, weight conversion may be performed by using a weight of the second neural network model that is in the available neural network model and that has a structure similar to that of the first neural network model, so that the weight that can be used by the first neural network model is obtained, implementing reusing of the model weight. Model training does not need to be performed from the beginning, improving model training efficiency. In addition, this method can reuse a weight obtained by training in another training task to reduce a large quantity of repeated work and avoid resource waste.

Further, when a function of the model weight obtaining system 100 is implemented by the training platform, the training platform may further initialize the first neural network model based on the obtained weight (specifically, the converted weight) of the first neural network model, and then train an initialized first neural network model by using the dataset. The training platform may use a fine-tuning manner, and specifically, update the weight by using a relatively low learning rate. Compared with training from the beginning, the method may effectively improve training efficiency.

In some possible implementations, when training of the first neural network model is completed, the training platform may further update a weight of a trained first neural network model to the weight library 108. In this way, data in the weight library 108 can be enriched, to provide help for subsequent model weight obtaining.

For ease of understanding, the following describes the method in embodiments of this application with reference to some specific scenarios.

In a first scenario, refer to a schematic flowchart of a model weight obtaining method shown in FIG. 7. The user inputs the to-be-trained first neural network model, where the first neural network model is a 29-layer residual neural network model, and a window size of a convolution kernel of a conv2 layer in a bottleneck (bottleneck) module is 5*5. Based on this, the first neural network model may be represented as resnet29_5*5. The training platform first searches the weight library 108 based on the structure information of the first neural network model, to obtain the reference weight. The reference weight is specifically a weight of resnet50_super _3 *3 trained based on ImageNet (a window size of a convolution kernel of a conv2 layer in a bottleneck module of the model is 3*3, and an input/output channel of conv2 is four times a common resnet). The training platform may input the reference weight into the weight conversion model for weight conversion, to obtain a weight that can be used by resnet29_5*5. The training platform uses the weight to initialize resnet29_5*5, and then trains initialized resnet29_5*5. Compared with random initialization, model precision obtained through training by using the foregoing method is improved by 16 percentage points, and training acceleration is nearly four times.

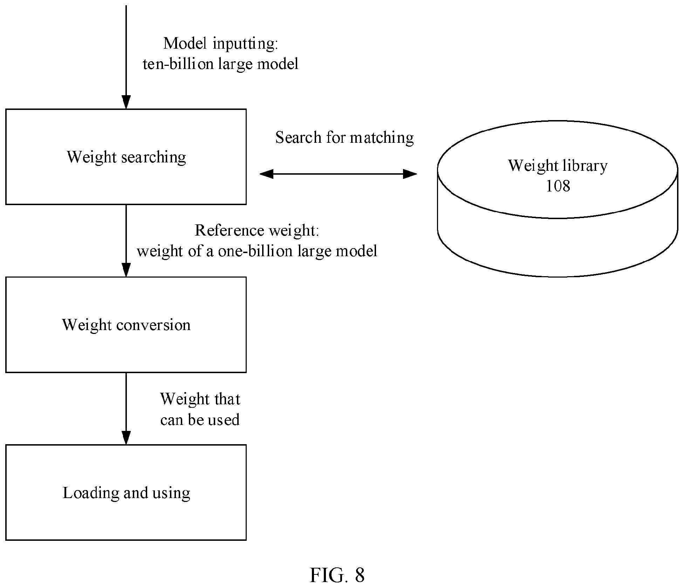

In a second scenario, refer to a schematic flowchart of a model weight obtaining method shown in FIG. 8. The user may input the to-be-trained first neural network model, where the first neural network model is a large model with a parameter level of ten billion. The training platform first searches the weight library 108 based on the structure information of the foregoing first neural network model, to obtain the reference weight. The reference weight is specifically a weight of a large model whose parameter level is one billion. Then, the training platform may copy or concatenate a reference matrix representing the reference weight, to obtain a target matrix, so that a weight that can be directly loaded and used by the large model whose parameter level is ten billion is obtained. The training platform initializes the first neural network model by using the weight, and trains an initialized first neural network model, to implement training acceleration. Training acceleration may be more than two times.

The foregoing describes in detail the model weight obtaining method provided in embodiments of this application with reference to FIG. 1 to FIG. 8. The following describes, with reference to the accompanying drawings, the model weight obtaining system 100 provided in embodiments of this application.

Refer to a schematic diagram of a structure of a model weight obtaining system shown in FIG. 1. The system 100 includes:
the interaction module 102, configured to obtain the structure information of the first neural network model;
the searching module 104, configured to search the weight library 108 based on the structure information of the first neural network model, to obtain the reference weight, where the weight library 108 stores a plurality of groups of historical weights, and the reference weight is the weight of the second neural network model having the structure similar to that of the first neural network model in the plurality of groups of historical weights; and
the conversion module 106, configured to convert the reference weight to obtain the weight of the first neural network model.

In some possible implementations, the reference weight is represented through a reference matrix corresponding to the structure of the second neural network model, and the conversion module 106 is specifically configured to:
crop, concatenate, and/or copy the reference matrix, to obtain a target matrix corresponding to the structure of the first neural network model, where the target matrix represents the weight of the first neural network model; or
input the reference matrix into a weight conversion model for conversion, to obtain a target matrix.

In some possible implementations, the reference matrix includes a matrix corresponding to a convolution kernel of the second neural network model, and the conversion module 106 is specifically configured to:
when a window size of a convolution kernel of the first neural network model is less than a window size of the convolution kernel of the second neural network model, or a quantity of input/output channels of a convolution kernel of the first neural network model is less than a quantity of input/output channels of the convolution kernel of the second neural network model, crop the reference matrix to obtain the target matrix; or
when a quantity of convolutional layers of the first neural network model is greater than a quantity of convolutional layers of the second neural network model, copy and/or concatenate the reference matrix to obtain the target matrix.

In some possible implementations, the system 100 further includes:
a training module, configured to: initialize the first neural network model based on the weight of the first neural network model, and train an initialized first neural network model by using a dataset.

In some possible implementations, the system 100 further includes:
an updating module, configured to: when training of the first neural network model is completed, update a weight of a trained first neural network model to the weight library.

In some possible implementations, the searching module 104 is specifically configured to:
determine, based on the structure information of the first neural network model and structure information of a neural network model corresponding to at least one of a plurality of groups of historical weights in the weight library 108, a similarity between the structure of the first neural network model and a structure of the neural network model corresponding to the at least one group of historical weights; and
obtain the weight of the second neural network model as the reference weight based on the similarity between the structure of the first neural network model and the structure of the neural network model corresponding to the at least one group of historical weights, where a similarity between the structure of the first neural network model and the structure of the second neural network model meets a preset condition.

In some possible implementations, the searching module 104 is specifically configured to:
obtain a first graph structure based on the structure information of the first neural network model, and obtain at least one second graph structure based on the structure information of the neural network model corresponding to the at least one group of historical weights; and
determine, by using a graph neural network based on the first graph structure and the at least one second graph structure, the similarity between the structure of the first neural network model and the structure of the neural network model corresponding to the at least one group of historical weights.

In some possible implementations, the weight library 108 stores a label corresponding to each group of historical weights, the label identifies a type of a neural network model corresponding to the historical weights and/or a type of a task to which the historical weights are applicable, and the searching module 104 is specifically configured to:
determine a search set from the weight library 108 based on the label corresponding to each group of historical weights, where the search set includes at least one group of historical weights whose label matches a type of the first neural network model and/or a type of a task to which the first neural network model is applicable; and
determine the reference weight from the search set based on the structure information of the first neural network model.

In some possible implementations, the searching module 104 is specifically configured to:
query a historical search record of the weight library 108 based on the structure information of the first neural network model, where the historical search record includes structure information of a historically searched neural network model and a found historical weight; and
when the structure information of the first neural network model is hit in the historical search record, obtain the found historical weight as the reference weight.

The model weight obtaining system 100 according to this embodiment of this application may correspondingly perform the method described in embodiments of this application, and the foregoing and another operation and/or a function of each module/unit of the model weight obtaining system 100 are separately used to implement a corresponding procedure of each method in the embodiment shown in FIG. 1. For brevity, details are not described herein again.

An embodiment of this application further provides a computing device cluster. The computing device cluster includes at least one computing device, and any one of the at least one computing device may be from a cloud environment or an edge environment, or may be a terminal device. The computing device cluster is specifically configured to implement a function of the model weight obtaining system 100 in the embodiment shown in FIG. 1.

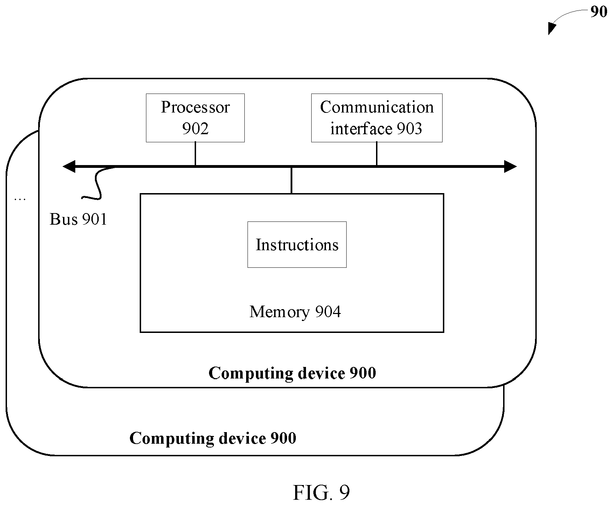

FIG. 9 provides a schematic diagram of a structure of a computing device cluster. As shown in FIG. 9, a computing device cluster 90 includes a plurality of computing devices 900, and the computing device 900 includes a bus 901, a processor 902, a communication interface 903, and a memory 904. The processor 902, the memory 904, and the communication interface 903 communicate with each other through the bus 901.

The bus 901 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, the bus is indicated by using only one bold line in FIG. 9. However, it does not indicate that there is only one bus or only one type of bus.

The processor 902 may be any one or more of processors such as a central processing unit (central processing unit, CPU), a graphics processing unit (graphics processing unit, GPU), a microprocessor (micro processor, MP), or a digital signal processor (digital signal processor, DSP).

The communication interface 903 is configured to communicate with the outside. For example, the communication interface 903 is configured to obtain structure information of the first neural network model, or output a weight of the first neural network model.

The memory 904 may include a volatile memory (volatile memory), for example, a random access memory (random access memory, RAM). The memory 904 may also include a non-volatile memory (non-volatile memory), for example, a read-only memory (read-only memory, ROM), a flash memory, a hard disk drive (hard disk drive, HDD), or a solid state drive (solid state drive, SSD).

The memory 904 stores computer-readable instructions, and the processor 902 executes the computer-readable instructions, so that the computing device cluster 90 performs the foregoing model weight obtaining method (or implements a function of the foregoing model weight obtaining system 100).

Specifically, in a case in which the embodiment of the system shown in FIG. 1 is implemented, and a function of each module such as the interaction module 102, the searching module 104, or the conversion module 106 of the model weight obtaining system 100 described in FIG. 1 is implemented by using software, software or program code required for executing the function of each module in FIG. 1 may be stored in at least one memory 904 in the computing device cluster 90. At least one processor 902 executes the program code stored in the at least one memory 904, so that the computing device 900 or the computing device cluster 90 performs the foregoing model weight obtaining method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device or a computing device cluster to perform the foregoing model weight obtaining method.

An embodiment of this application further provides a computer program product. The computer program product includes one or more computer-readable instructions. When the computer instructions are loaded and executed on a computing device, the procedures or functions according to embodiments of this application are all or partially generated. The computer instructions may be stored in a computer-readable storage medium, or may be transmitted from one computer-readable storage medium to another computer-readable storage medium. For example, the computer instructions may be transmitted from a website, computing device, or data center to another website, computing device, or data center in a wired (for example, a coaxial cable, an optical fiber, or a digital subscriber line (DSL)) or wireless (for example, infrared, radio, or microwave) manner. The computer program product may be a software installation package. When any one of the foregoing model weight obtaining methods needs to be used, the computer program product may be downloaded and executed on a computing device or a computing device cluster.

Descriptions of procedures or structures corresponding to the foregoing accompanying drawings have respective focuses. For a part that is not described in detail of a procedure or structure, refer to related descriptions of other procedures or structures.

## Claims

1. A model weight obtaining method, wherein the method comprises:
obtaining structure information of a first neural network model;
searching a weight library based on the structure information of the first neural network model, to obtain a reference weight, wherein the weight library stores a plurality of groups of historical weights, and the reference weight is a weight of a second neural network model having a structure similar to that of the first neural network model in the plurality of groups of historical weights; and
converting the reference weight to obtain a weight of the first neural network model.

2. The method according to claim 1, wherein the reference weight is represented through a reference matrix corresponding to the structure of the second neural network model, and the converting the reference weight to obtain a weight of the first neural network model comprises:
cropping, concatenating, and/or copying the reference matrix, to obtain a target matrix corresponding to the structure of the first neural network model, wherein the target matrix represents the weight of the first neural network model; or
inputting the reference matrix into a weight conversion model for conversion, to obtain the target matrix.

3. The method according to claim 2, wherein the reference matrix comprises a matrix corresponding to a convolution kernel of the second neural network model, and the cropping, concatenating, and/or copying the reference matrix, to obtain a target matrix corresponding to the structure of the first neural network model comprises:
when a window size of a convolution kernel of the first neural network model is less than a window size of the convolution kernel of the second neural network model, or a quantity of input/output channels of a convolution kernel of the first neural network model is less than a quantity of input/output channels of the convolution kernel of the second neural network model, cropping the reference matrix to obtain the target matrix; or
when a quantity of convolutional layers of the first neural network model is greater than a quantity of convolutional layers of the second neural network model, copying and/or concatenating the reference matrix to obtain the target matrix.

4. The method according to any one of claims 1 to 3, wherein the method further comprises:
initializing the first neural network model based on the weight of the first neural network model; and
training an initialized first neural network model by using a dataset.

5. The method according to claim 4, wherein the method further comprises:
when training of the first neural network model is completed, updating a weight of a trained first neural network model to the weight library.

6. The method according to any one of claims 1 to 5, wherein the searching a weight library based on the structure information of the first neural network model, to obtain a reference weight comprises:
determining, based on the structure information of the first neural network model and structure information of a neural network model corresponding to at least one of the plurality of groups of historical weights in the weight library, a similarity between the structure of the first neural network model and a structure of the neural network model corresponding to the at least one group of historical weights; and
obtaining the weight of the second neural network network model as the reference weight based on the similarity between the structure of the first neural network model and the structure of the neural network model corresponding to the at least one group of historical weights, wherein a similarity between the structure of the first neural network model and the structure of the second neural network model meets a preset condition.

7. The method according to claim 6, wherein the determining, based on the structure information of the first neural network model and structure information of a neural network model corresponding to at least one of the plurality of groups of historical weights in the weight library, a similarity between the structure of the first neural network model and a structure of the neural network model corresponding to the at least one group of historical weights comprises:
obtaining a first graph structure based on the structure information of the first neural network model, and obtaining at least one second graph structure based on the structure information of the neural network model corresponding to the at least one group of historical weights; and
determining, by using a graph neural network based on the first graph structure and the at least one second graph structure, the similarity between the structure of the first neural network model and the structure of the neural network model corresponding to the at least one group of historical weights.

8. The method according to claim 6 or 7, wherein the weight library stores a label corresponding to each group of historical weights, the label identifies a type of a neural network model corresponding to the historical weights and/or a type of a task to which the historical weights are applicable, and the searching a weight library based on the structure information of the first neural network model, to obtain a reference weight comprises:
determining a search set from the weight library based on the label corresponding to each group of historical weights, wherein the search set comprises at least one group of historical weights whose label matches a type of the first neural network model and/or a type of a task to which the first neural network model is applicable; and
determining the reference weight from the search set based on the structure information of the first neural network model.

9. The method according to any one of claims 1 to 5, wherein the searching a weight library based on the structure information of the first neural network model, to obtain a reference weight comprises:
querying a historical search record of the weight library based on the structure information of the first neural network model, wherein the historical search record comprises structure information of a historically searched neural network model and a found historical weight; and
when the structure information of the first neural network model is hit in the historical search record, obtaining the found historical weight as the reference weight.

10. A model weight obtaining system, comprising:
an interaction module, configured to obtain structure information of a first neural network model;
a searching module, configured to search a weight library based on the structure information of the first neural network model, to obtain a reference weight, wherein the weight library stores a plurality of groups of historical weights, and the reference weight is a weight of a second neural network model having a structure similar to that of the first neural network model in the plurality of groups of historical weights; and
a conversion module, configured to convert the reference weight to obtain a weight of the first neural network model.

11. The system according to claim 10, wherein the reference weight is represented through a reference matrix corresponding to the structure of the second neural network model, and the conversion module is specifically configured to:
crop, concatenate, and/or copy the reference matrix, to obtain a target matrix corresponding to the structure of the first neural network model, wherein the target matrix represents the weight of the first neural network model; or
input the reference matrix into a weight conversion model for conversion, to obtain the target matrix.

12. The system according to claim 11, wherein the reference matrix comprises a matrix corresponding to a convolution kernel of the second neural network model, and the conversion module is specifically configured to:
when a window size of a convolution kernel of the first neural network model is less than a window size of the convolution kernel of the second neural network model, or a quantity of input/output channels of a convolution kernel of the first neural network model is less than a quantity of input/output channels of the convolution kernel of the second neural network model, crop the reference matrix to obtain the target matrix; or
when a quantity of convolutional layers of the first neural network model is greater than a quantity of convolutional layers of the second neural network model, copy and/or concatenate the reference matrix to obtain the target matrix.

13. The system according to any one of claims 10 to 12, wherein the system further comprises:
a training module, configured to: initialize the first neural network model based on the weight of the first neural network model, and train an initialized first neural network model by using a dataset.

14. The system according to claim 13, further comprising:
an updating module, configured to: when training of the first neural network model is completed, update a weight of a trained first neural network model to the weight library.

15. The system according to any one of claims 10 to 14, wherein the searching module is specifically configured to:
determine, based on the structure information of the first neural network model and structure information of a neural network model corresponding to at least one of the plurality of groups of historical weights in the weight library, a similarity between the structure of the first neural network model and a structure of the neural network model corresponding to the at least one group of historical weights; and
obtain the weight of the second neural network network model as the reference weight based on the similarity between the structure of the first neural network model and the structure of the neural network model corresponding to the at least one group of historical weights, wherein a similarity between the structure of the first neural network model and the structure of the second neural network model meets a preset condition.

16. The system according to claim 15, wherein the searching module is specifically configured to:
obtain a first graph structure based on the structure information of the first neural network model, and obtain at least one second graph structure based on the structure information of the neural network model corresponding to the at least one group of historical weights; and
determine, by using a graph neural network based on the first graph structure and the at least one second graph structure, the similarity between the structure of the first neural network model and the structure of the neural network model corresponding to the at least one group of historical weights.

17. The system according to claim 15 or 16, wherein the weight library stores a label corresponding to each group of historical weights, the label identifies a type of a neural network model corresponding to the historical weights and/or a type of a task to which the historical weights are applicable, and the searching module is specifically configured to:
determine a search set from the weight library based on the label corresponding to each group of historical weights, wherein the search set comprises at least one group of historical weights whose label matches a type of the first neural network model and/or a type of a task to which the first neural network model is applicable; and
determine the reference weight from the search set based on the structure information of the first neural network model.

18. The system according to any one of claims 10 to 14, wherein the searching module is specifically configured to:
query a historical search record of the weight library based on the structure information of the first neural network model, wherein the historical search record comprises structure information of a historically searched neural network model and a found historical weight; and
when the structure information of the first neural network model is hit in the historical search record, obtain the found historical weight as the reference weight.

19. A computing device cluster, wherein the computing device cluster comprises at least one computing device, the at least one computing device comprises at least one processor and at least one memory, the at least one memory stores computer-readable instructions, and the at least one processor executes the computer-readable instructions, so that the computing device or the computing device cluster performs the method according to any one of claims 1 to 9.

20. A computer-readable storage medium, storing computer-readable instructions, wherein when the computer-readable instructions are run on a computing device or a computing device cluster, the computing device or the computing device cluster performs the method according to any one of claims 1 to 9.

21. A computer program product, comprising computer-readable instructions, wherein when the computer-readable instructions are run on a computing device or a computing device cluster, the computing device or the computing device cluster performs the method according to any one of claims 1 to 9.
